# EUROPEAN PATENT APPLICATION

(11) **EP 4 712 255 A1**
(43) Date of publication of application: **18.03.2026**
(21) Application number: 24900974.7
(22) Date of filing: 28.11.2024
(51) Int. Cl.: H01M 50/59, H01M 50/593, H01M 50/342, H01M 50/588

(54) **BATTERY MODULE WITH IMPROVED INSULATION**

(30) Priority: 06.12.2023 KR 20230175980
(71) Applicant: LG Energy Solution, Ltd., Seoul 07335 (KR)
(72) Inventor: KANG, Jae Hyuk, Daejeon 34122 (KR)
(74) Representative: BCKIP Part mbB
(86) International application number: PCT/KR2024/019169
(87) International publication number: WO 2025/121788

(57) **Abstract**

The present invention provides a structure of a battery module comprising: a battery cell; a housing accommodating the battery cell; a cover constituting one side of the housing and provided with a first hole connecting inside and outside of the housing; an insulation sheet provided between the battery cell and the cover and having a second hole disposed at a position corresponding to the first hole; and a hole insulator covering at least a portion of an inner circumferential surface of the first hole.

## Description

### [TECHNICAL FIELD]

This application claims the benefit of priority based on Korean Patent Application No. 10-2023-0175980 filed on December 6, 2023, entire content disclosed in the document of the patent applications is included as a part of this specification.

The present invention relates to a battery module having improved insulation incorporating a battery cell. More specifically, the present invention relates to a structure of a battery module including a housing provided with an exhaust hole for exhausting gas and a battery cell accommodated therein with improved electrical insulation between the housing and the battery cell.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

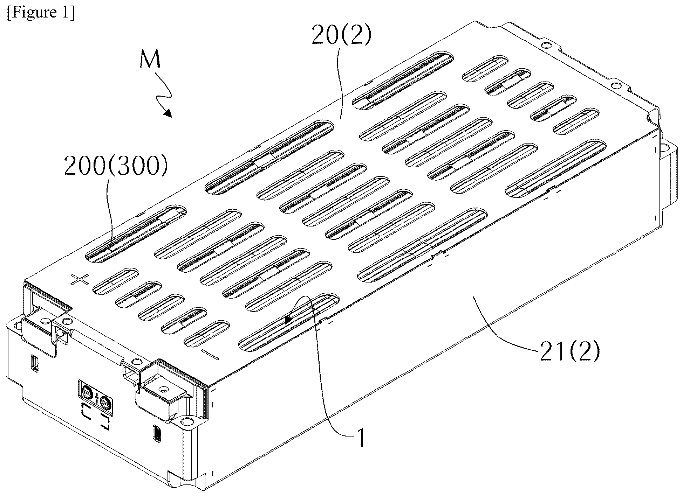

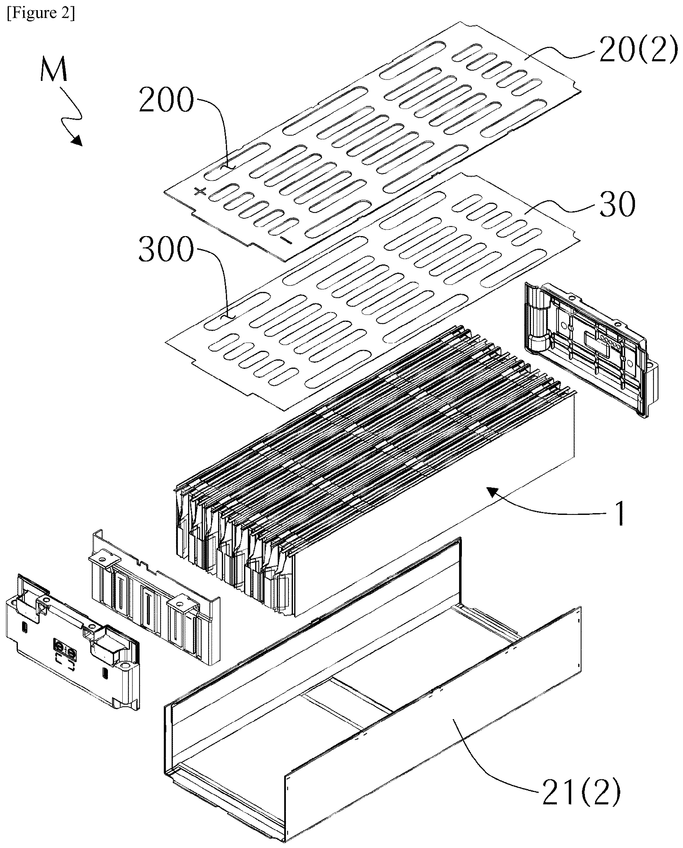

FIGS. 1 and 2 illustrate a battery module having an exhaust hole. Referring to FIGS. 1 and 2, a battery module M generally includes a battery cell 1 and a housing 2 accommodating the battery cell 1, and the housing 2 may include a cover 20 constituting one side thereof to be opened and closed before and after accommodating the battery cell 1.

The battery cell 1 may generate heat or gas during normal operation or during charge and discharge, and may also release high-temperature and high-pressure gas during a thermal runaway caused by a short circuit, etc. Here, in order to prevent the housing 2 from exploding due to excessive internal pressure, a structure of the cover 20 provided with an exhaust hole 200 for discharging the gas or flame is widely known.

Meanwhile, since the cover 20 is often made of a conductive metal material, insulation between the battery cell 1 and the cover 20 is often necessary to prevent an accident due to a short circuit of the battery cell 1. The battery module M may include an insulation sheet 30 provided between the cover 20 and the battery cell 1 for such purpose.

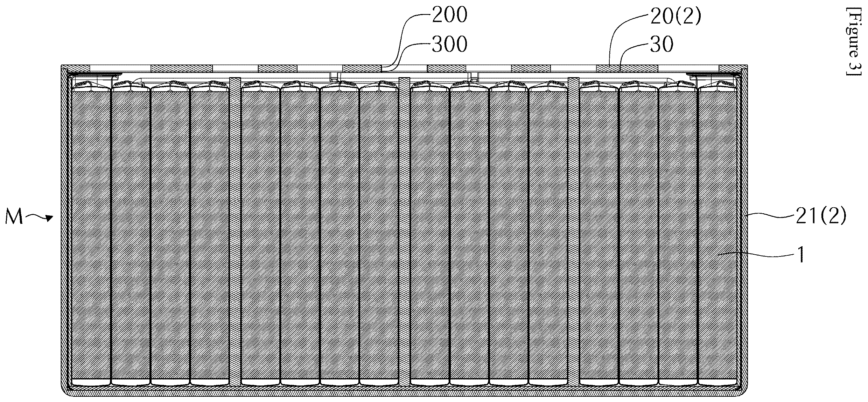

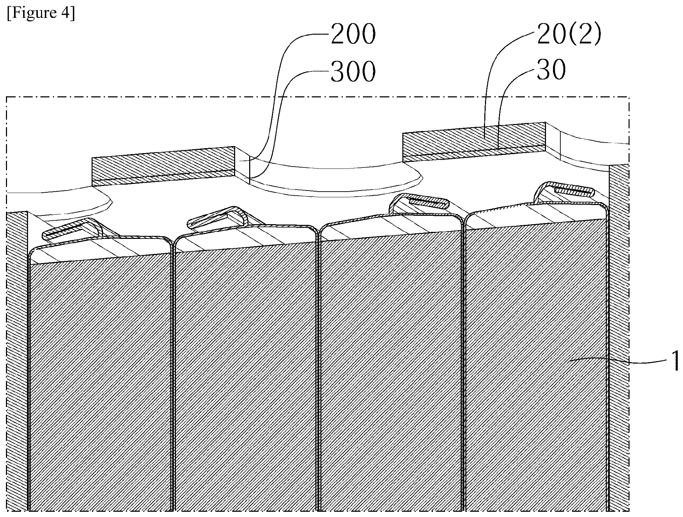

FIGS. 3 and 4 illustrate a cross-section of the battery module of FIG. 1. Referring to FIGS. 3 and 4, the insulation sheet 30 is attached to the inner surface of the cover 20. An exhaust hole 300 disposed at a position corresponding to the exhaust hole 200 of the cover 20 is provided in the insulation sheet 30 for discharging gas or flame.

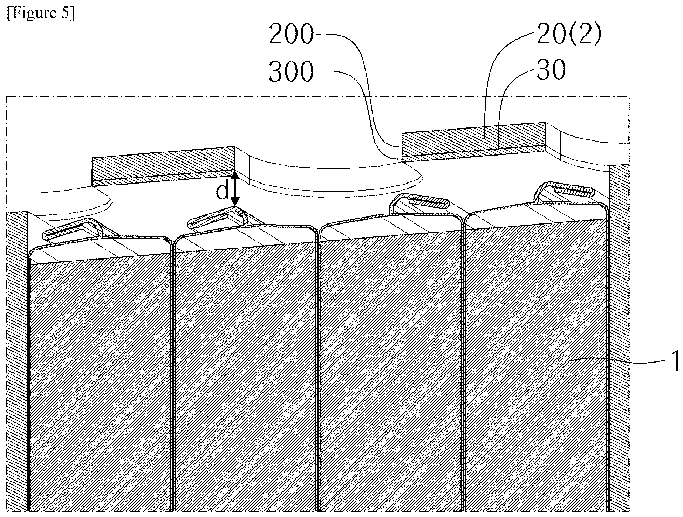

FIG. 5 illustrates an insulation distance in the battery module of FIG. 1. Referring to FIG. 5, since the insulation sheet 30 is attached only to the inner surface of the cover 20, the inner circumferential surface of the exhaust hole 200 of the cover 20 made of a metal material is exposed. Accordingly, unlike the case where the exhaust hole 300 is not provided in the insulation sheet 30, the insulation distance d between the battery cell 1 and the cover 20 becomes very short, which increases the risk of short circuit.

### [DISCLOSURE]

### [TECHNICAL PROBLEM]

In order to solve above-described problem of prior art, it is an object of the present invention to provide a structure of a battery module with improved insulation between a battery cell and a housing accommodating the battery cell. In particular, it is an object of the present invention to provide a structure of a battery module with increased insulation distance between the housing provided with exhaust holes for discharging gas and flame and the battery cell.

It is another object of the present invention to provide a structure of a battery module that is capable of minimizing the risk of short circuit between the exposed metal portion of the exhaust hole and the battery cell without blocking the exhaust hole so as to discharge the gas smoothly, and also is simple and economical to manufacture.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above problems, the present invention provides a structure of a battery module comprising: a battery cell; a housing accommodating the battery cell; a cover constituting one side of the housing and provided with a first hole connecting inside and outside of the housing; an insulation sheet provided between the battery cell and the cover and having a second hole disposed at a position corresponding to the first hole; and a hole insulator covering at least a portion of an inner circumferential surface of the first hole.

According to the present invention, since the hole insulator covers the inner circumferential surface of the first hole, a structure of a battery module capable of reducing the risk of a short circuit that may increase due to the second hole provided in the insulation sheet may be provided.

The insulation sheet may be attached to the inner surface of the cover. However, it is not necessary that the insulation sheet be attached to the cover as long as the insulation sheet is provided between the battery cell and the cover so as to insulate one from the other.

The housing may include a frame with an open upper portion. Here, the cover may be a top cover covering the open upper portion of the frame. Although the hole for discharging gas is generally provided in the top cover of the battery module, the structure and arrangement of the housing and the cover may differ.

It is preferable that a plurality of first holes and a plurality of hole insulators are provided.

According to the first embodiment of the present invention, the hole insulator may be an extension of the insulation sheet extending from the inner circumference of the second hole. For example, the hole insulator may be formed by plastically deforming the insulation sheet to fit the first hole.

It is preferable that the hole insulator covers entire circumferential section of at least a portion of inner circumferential surface of the first hole in thicknesswise direction. More preferably, the hole insulator may cover the entire inner circumferential surface of the first hole. Accordingly, the insulation distance between the battery cell and the cover may increase at least by the thickness of the cover.

The hole insulator may include an overhang part having a front end extending inward in radial direction of the first hole. When the overhang part may be provided along the entire circumference of the first hole, the overhang part may also be provided along the entire circumference of the first hole. Here, the overhang part may be the outer end portion of the hole insulator bent inward in radial direction. The overhang part may extend across the path from the battery cell to the exposed portion of the cover, thereby further increasing the insulation distance between the battery cell and the cover.

The hole insulator may include an outer cover portion that extends outward in radial direction of the first hole on an outer surface of the cover. It is preferable that the outer cover portion is provided along the entire circumference of the first hole. The outer cover portion may increase the insulation distance between the battery cell and the cover by covering a portion of the outer surface of the cover about the first hole.

According to the second embodiment of the present invention, the hole insulator may be provided at a hole insulation member mounted on the first hole.

The hole insulator may cover the entire inner circumferential surface of the first hole. Accordingly, the insulation distance between the battery cell and the cover may increase at least by the thickness of the cover.

The hole insulation member may overlap with the insulation sheet in radial direction. Alternatively, the hole insulation member may overlap with the insulation sheet and the cover vertically on the inner surface of the cover. As a result, a short circuit between the battery cell and the inner surface of the cover exposed through the gap between the insulation sheet and the hole insulation member may be prevented.

For example, the hole insulator may include an inner cover portion that extends outward in radial direction of the first hole on an inner surface of the cover. It is preferable that the inner cover portion is provided along the entire circumference of the first hole. The inner cover portion interferes with the inner surface of the cover to prevent the hole insulation member from being detached and falling out of the housing through the first hole while overlapping with the insulation sheet to prevent a short circuit between the inner surface of the cover and the battery cell.

The hole insulator may include an outer cover portion that extends outward in radial direction of the first hole on an outer surface of the cover. It is preferable that the outer cover portion is provided along the entire circumference of the first hole. The outer cover portion may increase the insulation distance between the battery cell and the cover by covering a portion of the outer surface of the cover about the first hole. In addition, the outer cover portion may prevent the hole insulation member from being detached and falling into the housing through the first hole by interfering with the outer surface of the cover.

According to the second embodiment of the present invention, the hole insulation member includes the inner cover portion and the outer cover portion for fixing the hole insulation member to the first hole so as prevent the hole insulation member from moving in thicknesswise direction.

The present invention also provides structures of a battery pack including the battery module and a vehicle including the battery pack.

A plurality of battery modules may be integrated into a battery pack to increase the capacity and/or voltage thereof. The battery pack may include an exhaust device capable of discharging gases and flames emitted when the battery module ignites. The battery pack may be built into a vehicle as a power source. The vehicle may include an electric vehicle, a hybrid vehicle, etc.

### [ADVANTAGEOUS EFFECTS]

The present invention may provide a battery module structure with improved insulation and minimal risk of short circuit.

Specifically, the present invention may provide a structure of a battery module provided with an exhaust hole for discharging gas and flame wherein the insulation distance between the battery cell and the housing is increased by a hole insulator of insulating property covering the inner circumferential surface of the exhaust hole.

The present invention may also provide a structure of a battery module wherein the insulation performance is improved and the risk of accident is minimized while being manufactured by a simple method such as plastic deformation of a synthetic resin film with insulating properties without requiring many additional materials or complex configurations to be economical.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a battery module having an exhaust hole.
FIGS. 3 and 4 illustrate a cross-section of the battery module of FIG. 1.
FIG. 5 illustrates an insulation distance in the battery module of FIG. 1.
FIGS. 6 and 7 illustrate a battery module according to a first embodiment of the present invention.
FIG. 8 illustrates an insulation sheet according to the first embodiment of the present invention.
FIG. 9 illustrates a cover and an insulation sheet according to the first embodiment of the present invention.
FIGS. 10 and 11 illustrate a cross-section of a battery module according to the first embodiment of the present invention.
FIG. 12 illustrates an insulation distance in a battery module according to the first embodiment of the present invention.
FIGS. 13 and 14 illustrate a battery module according to a second embodiment of the present invention.
FIG. 15 illustrates a hole insulation member according to the second embodiment of the present invention.
FIG. 16 illustrates a cover, an insulation sheet and a hole insulation member according to the second embodiment of the present invention.
FIGS. 17 and 18 illustrate a cross-section of a battery module according to the second embodiment of the present invention.
FIG. 19 illustrates an insulation distance in a battery module according to the second embodiment of the present invention.
FIGS. 20 and 21 illustrate a battery pack including a battery module and a vehicle including the battery pack according to an embodiment of the present invention.

### [DESCRIPTION OF REFERENCE NUMERALS]

1: battery cell
2: housing
   20: cover
      200: first hole (exhaust hole)
   21: frame
30: insulation sheet
   300: second hole
31: hole insulator (hole insulation member)
   311: overhang part
   312: inner cover portion
   313: outer cover portion
d: insulation distance
M: battery module
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [FIRST EMBODIMENT: BATTERY MODULE HAVING INSULATION SHEET WITH EXTENSION]

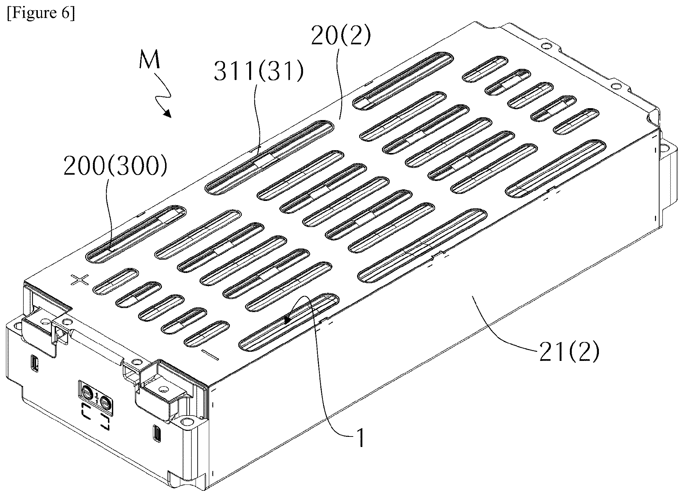

Hereinafter, with reference to FIGS. 6 to 12, a battery module and an insulation structure thereof according to a first embodiment of the present invention will be described in detail.

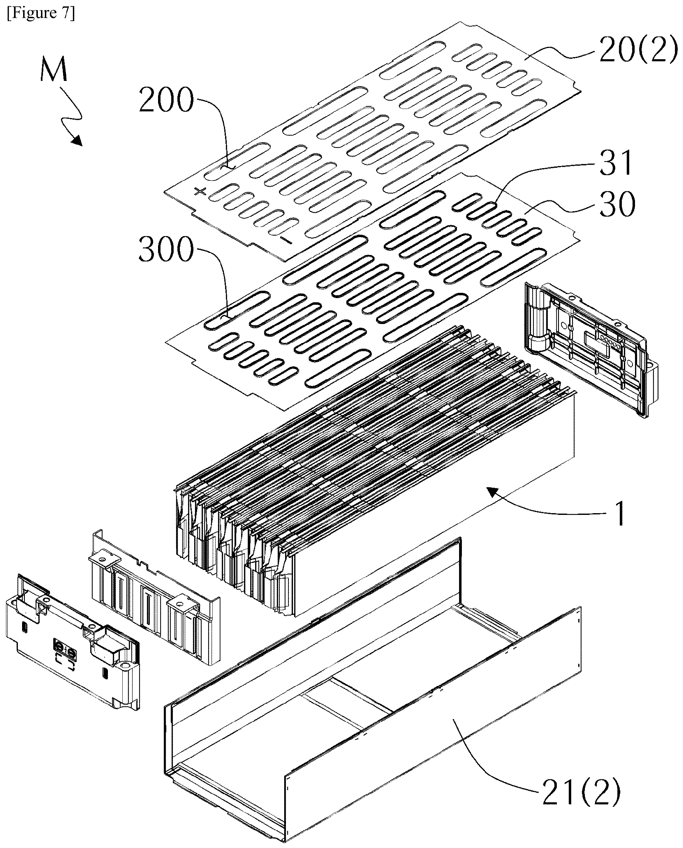

FIGS. 6 and 7 illustrate a battery module according to a first embodiment of the present invention. Referring to FIGS. 6 and 7, a battery module M according to a first embodiment may include a battery cell 1 and a housing 2 accommodating the battery cell 1.

The battery cell 1 may be a pouch-type battery cell including a pouch of a metal film, and may be a cell laminate in which a plurality of cells is laminated in widthwise direction. However, the structure thereof is not particularly limited.

The housing 2 may include a cover 20 constituting one side thereof. According to the first embodiment, the housing 2 may include a frame 21 having an open upper portion and the cover 20 covering the upper portion.

The housing 2, particularly the cover 20, may include a conductive metal material.

The cover 20 may be provided with a first hole 200 for discharging gas generated from the battery cell 1 to the outside of the housing 2. A plurality of first holes 200 may be provided.

An insulation sheet 30 may be provided between the battery cell 1 and the cover 20 to electrically insulate them. The insulation sheet 30 may be attached to, for example, the inner surface of the cover 20.

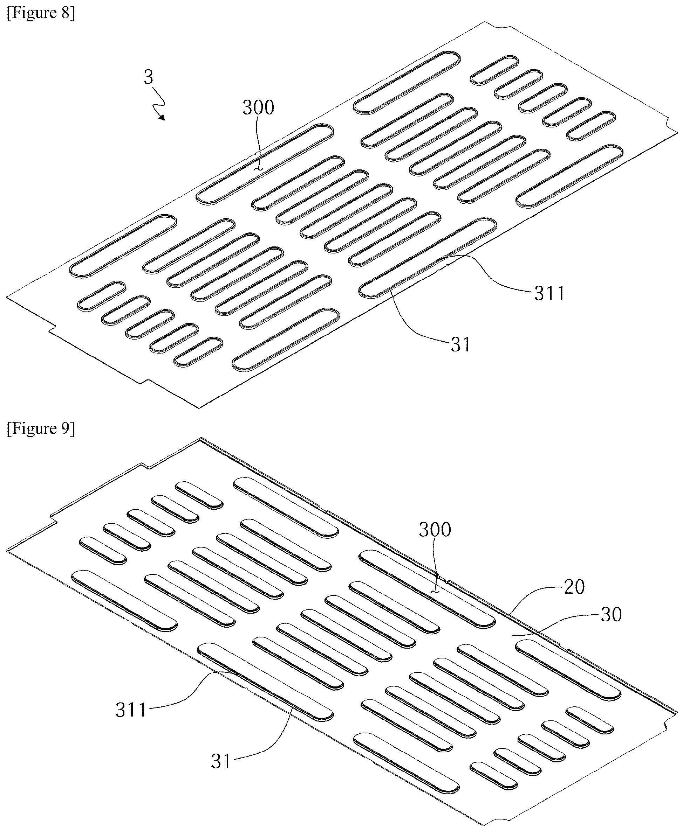

FIG. 8 illustrates an insulation sheet according to the first embodiment of the present invention, and FIG. 9 illustrates a cover and an insulation sheet according to the first embodiment of the present invention. Referring to FIGS. 8 and 9, a second hole 300 disposed at a position corresponding to the first hole 200 may be provided in the insulation sheet 30.

Here, when the inner circumferential surface of the first hole 200 is not covered by the insulation sheet 30 and is exposed, there is a high risk of a short circuit between the exposed inner circumferential surface of the first hole 200 and the battery cell 1. To prevent the short circuit, the battery module M may include a hole insulator 31 that covers at least a portion of the inner circumferential surface of the first hole 200.

According to the first embodiment, the hole insulator 31 may extend from the insulation sheet 30. For example, the hole insulator 31 may be a portion of the insulation sheet 30 that extends from the circumference of the second hole 300. The hole insulator 31 according to the first embodiment may be formed, for example, by stretching and plastically deforming the insulation sheet 30.

It is preferable that the hole insulator 31 is provided along the entire inner circumferential surface of the first hole 200. More preferably, the hole insulator 31 may cover the entire inner circumferential surface of the first hole 200. Accordingly, the insulation distance between the battery cell 1 and the cover 20 may increase at least by the thickness of the cover 20.

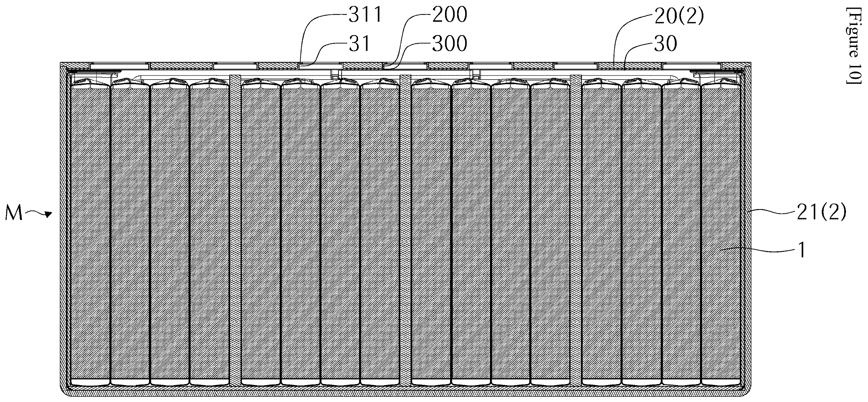

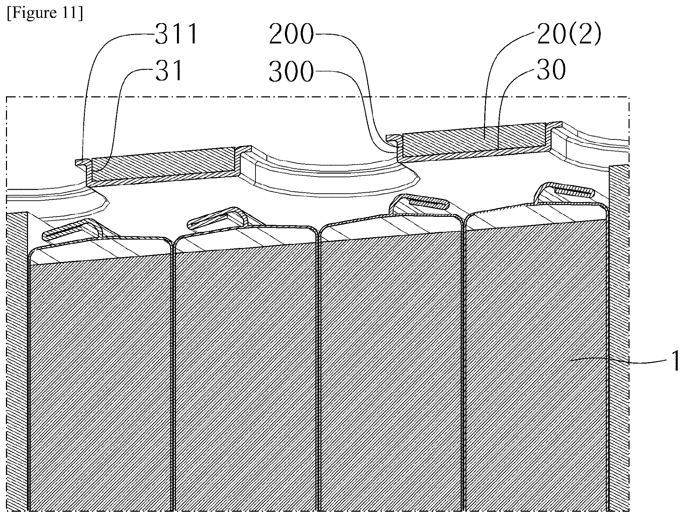

FIGS. 10 and 11 illustrate a cross-section of a battery module according to the first embodiment of the present invention. Referring to FIGS. 10 and 11, the hole insulator 31 may include an overhang part 311 having a front end extending inward in radial direction of the first hole 200. The overhang part 311 may be provided along the entire circumference of the first hole 200. According to a first embodiment, the overhang part 311 may be the upper end portion of the hole insulator 31 bent inward in radial direction.

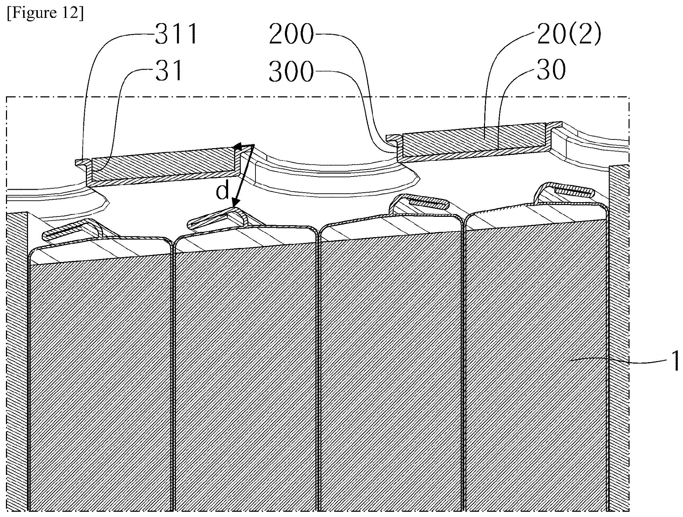

FIG. 12 illustrates an insulation distance in a battery module according to the first embodiment of the present invention. Referring to FIG. 12, the battery module M according to the first embodiment may have a large insulation distance d by having the hole insulator 31 that covers most of the inner circumferential surface of the first hole 200 and the overhang part 311 that extends inward in radial direction of the first hole 200.

Here, the overhang part 311 may extend across the path from the battery cell 1 to the exposed portion of the cover 20, thereby further increasing the insulation distance d.

In a modified example, the hole insulator 31 may include an outer cover portion (not shown) that extends outward in radial direction of the first hole 200 on an outer surface of the cover 20. It is preferable that the outer cover portion is provided along the entire circumference of the first hole 200. For example, the outer cover portion may increase the insulation distance by covering a portion of the outer surface of the cover 20 about the first hole 200. In addition, the outer cover portion may fix the insulation sheet 30 to the cover 20 by interfering with the outer surface of the cover 20.

### [SECOND EMBODIMENT: BATTERY MODULE HAVING HOLE INSULATION MEMBER]

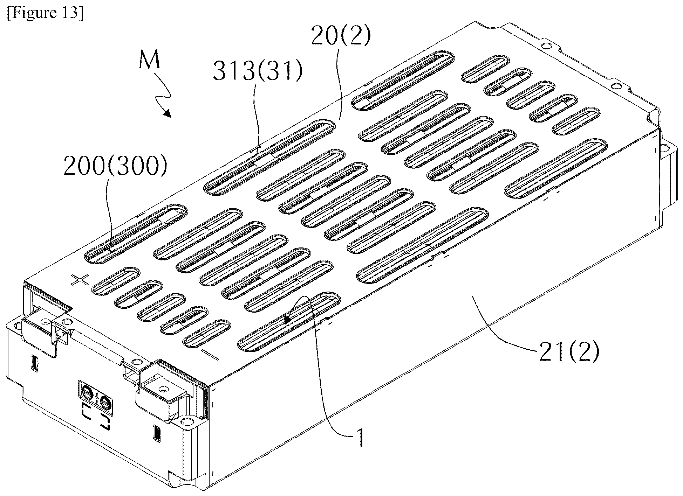

Hereinafter, with reference to FIGS. 13 to 19, a battery module and an insulation structure thereof according to a second embodiment of the present invention and its will be described in detail.

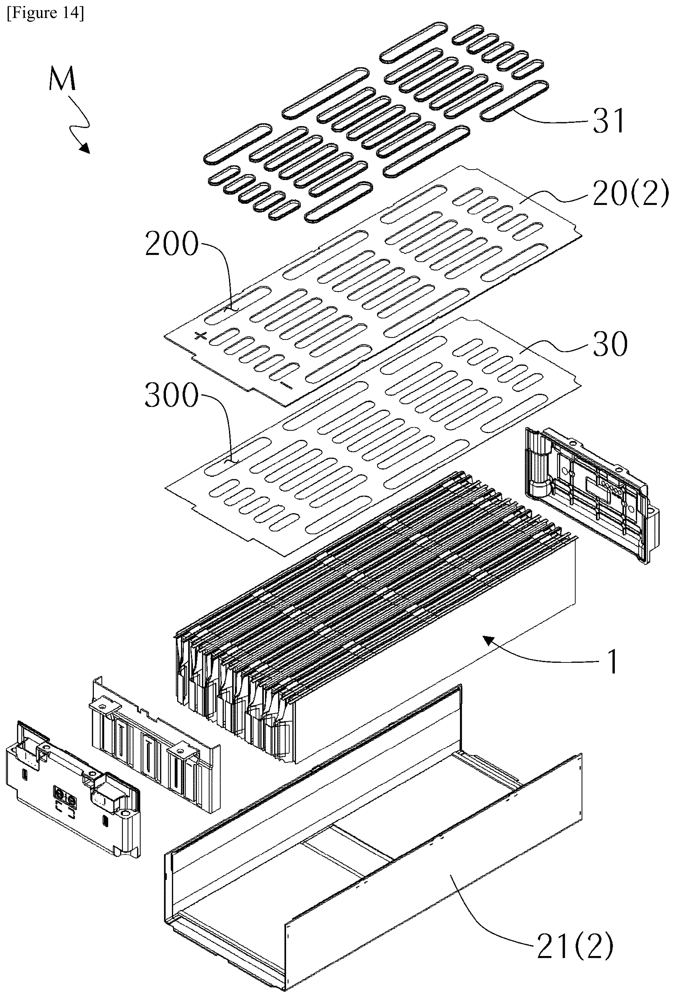

FIGS. 13 and 14 illustrate a battery module according to a second embodiment of the present invention. Referring to FIGS. 13 and 14, a battery module M according to the second embodiment may include a battery cell 1 and a housing 2 accommodating the battery cell 1.

The battery cell 1 may be a pouch-type battery cell including a pouch of a metal film, and may be a cell laminate in which a plurality of cells is laminated in widthwise direction. However, the structure thereof is not particularly limited.

The housing 2 may include a cover 20 constituting one side thereof. According to the first embodiment, the housing 2 may include a frame 21 having an open upper portion and the cover 20 covering the upper portion.

The housing 2, particularly the cover 20, may include a conductive metal material.

The cover 20 may be provided with a first hole 200 for discharging gas generated from the battery cell 1 to the outside of the housing 2. A plurality of first holes 200 may be provided.

An insulation sheet 30 may be provided between the battery cell 1 and the cover 20 to electrically insulate them. The insulation sheet 30 may be attached to, for example, the inner surface of the cover 20.

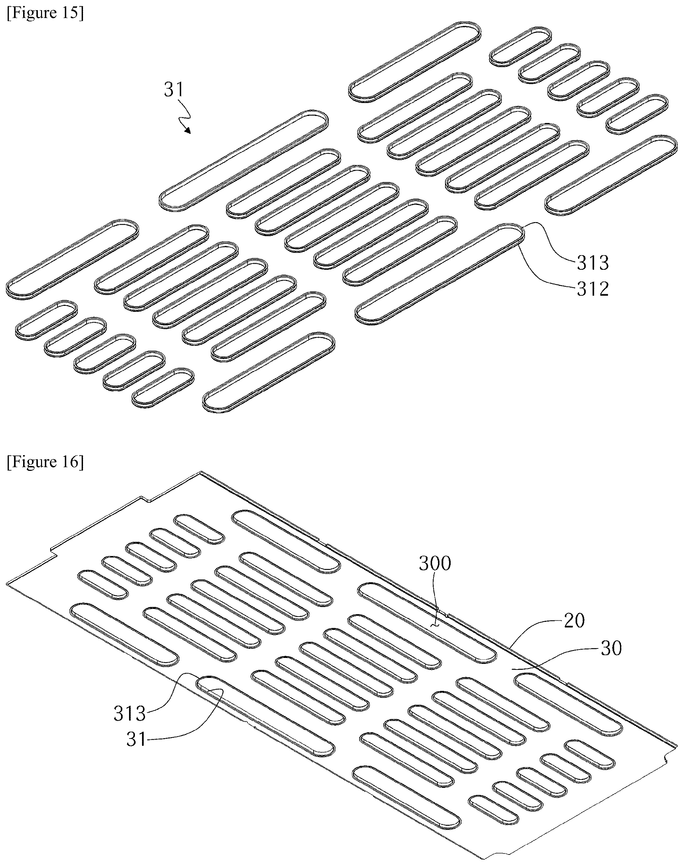

FIG. 15 illustrates a hole insulation member according to the second embodiment of the present invention, and FIG. 16 illustrates a cover, an insulation sheet and a hole insulation member according to the second embodiment of the present invention. Referring to FIGS. 15 and 16, a second hole 300 disposed at a position corresponding to the first hole 200 may be provided in the insulation sheet 30.

Here, when the inner circumferential surface of the first hole 200 is not covered by the insulation sheet 30 and is exposed, there is a high risk of a short circuit between the exposed inner circumferential surface of the first hole 200 and the battery cell 1. To prevent the short circuit, the battery module M may include a hole insulator 31 that covers at least a portion of the inner circumferential surface of the first hole 200.

It is preferable that the hole insulator 31 is provided along the entire inner circumferential surface of the first hole 200. More preferably, the hole insulator 31 may cover the entire inner circumferential surface of the first hole 200. Accordingly, the insulation distance between the battery cell 1 and the cover 20 may increase at least by the thickness of the cover 20.

According to the second embodiment, the hole insulator 31 may be provided at the hole insulation member 31 fixed to the first hole 200. According to the second embodiment, the hole insulator 31 may be the hole insulation member 31 itself. For example, the hole insulator 31 according to the second embodiment may be an annular member fitted into the inner circumferential surface of the first hole 200.

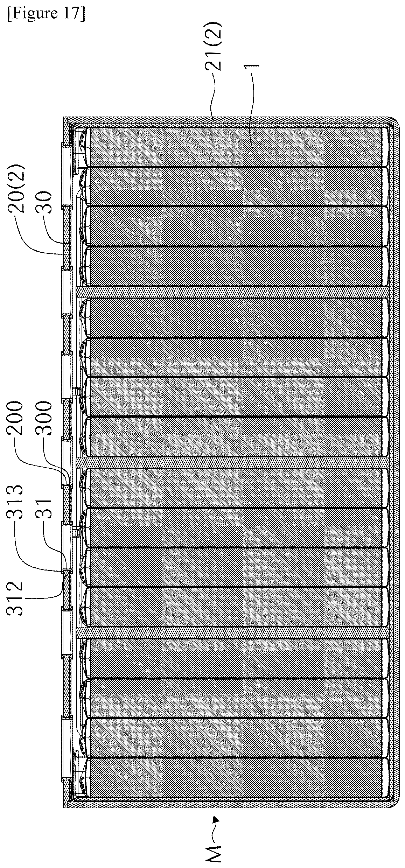

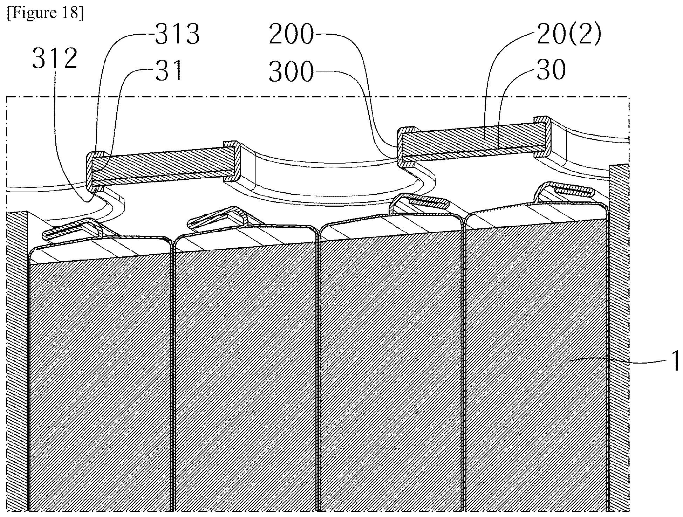

FIGS. 17 and 18 illustrate a cross-section of a battery module according to the second embodiment of the present invention. Referring to FIGS. 17 and 18, the hole insulation member 31 may overlap with the insulation sheet 30.

Specifically, the hole insulation member 31 may overlap with the insulation sheet 30 in radial direction. Alternatively, the hole insulation member 31 may overlap with the insulation sheet 30 and the cover 20 vertically on the inner surface of the cover 20. As a result, a short circuit between the battery cell 1 and the inner surface of the cover 20 exposed through the gap between the insulation sheet 30 and the hole insulation member 31 may be prevented.

For example, the hole insulator 31 may include an inner cover portion 312 that extends outward in radial direction of the first hole 200 on an inner surface of the cover 20. It is preferable that the inner cover portion 312 is provided along the entire circumference of the first hole 200. The inner cover portion 312 interferes with the inner surface of the cover 20 to prevent the hole insulation member 31 from being detached and falling out of the housing 2 through the first hole 200 while overlapping with the insulation sheet 30 to prevent a short circuit between the inner surface of the cover 20 and the battery cell 1.

For example, the hole insulator 31 may include an outer cover portion 313 that extends outward in radial direction of the first hole 200 on an outer surface of the cover 20. It is preferable that the outer cover portion 313 is provided along the entire circumference of the first hole 200. The outer cover portion 313 may increase the insulation distance between the battery cell 1 and the cover 20 by covering a portion of the outer surface of the cover 20 about the first hole 200. In addition, the outer cover portion 313 may prevent the hole insulation member 31 from being detached and falling into the housing 2 through the first hole 200 by interfering with the outer surface of the cover 20.

The inner cover portion 312 and/or the outer cover portion 313 may be formed by plastically deforming the annular end of the hole insulation member 31 to be spread outward.

According to the second embodiment of the present invention, the hole insulation member 31 includes the inner cover portion 312 and the outer cover portion 313 for fixing the hole insulation member 31 to the first hole so as prevent the hole insulation member 31 from moving in thicknesswise direction.

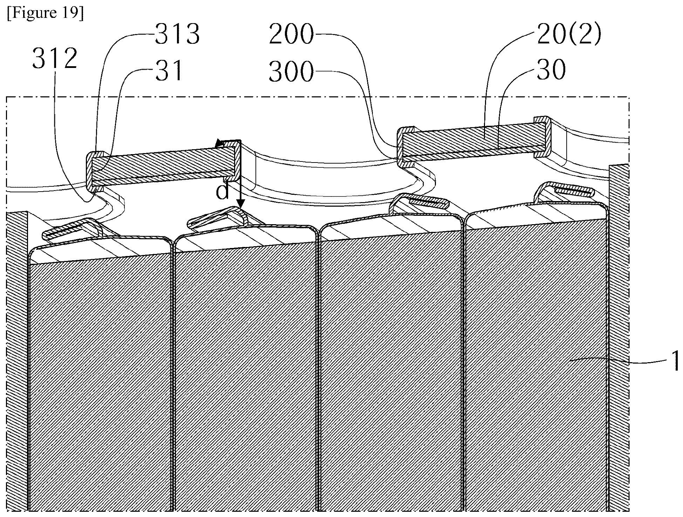

FIG. 19 illustrates an insulation distance in a battery module according to the second embodiment of the present invention. Referring to FIG. 19, the battery module M according to the second embodiment may have a large insulation distance d by having the hole insulation member 31 that covers most of the inner circumferential surface of the first hole 200 and has the inner cover portion 312 and/or the outer cover portion 313.

Here, the inner cover portion 312 and the outer cover portion 313 interfere with the cover 20 to fix the hole insulation member 31 such that the hole insulation member 31 does not fall into or fall out of the housing 2 while increasing the insulation distance d by extending along the path from the battery cell 1 to the exposed portion of the cover 20.

### [STRUCTURES OF BATTERY PACK AND VEHICLE]

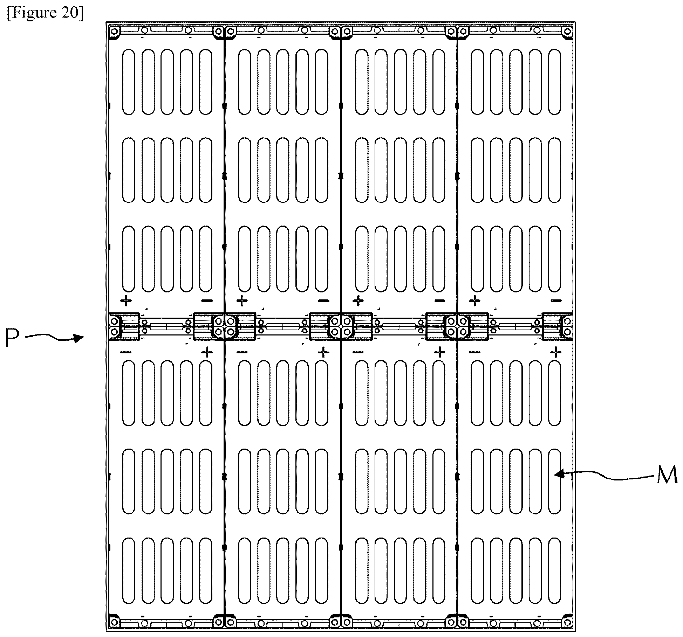

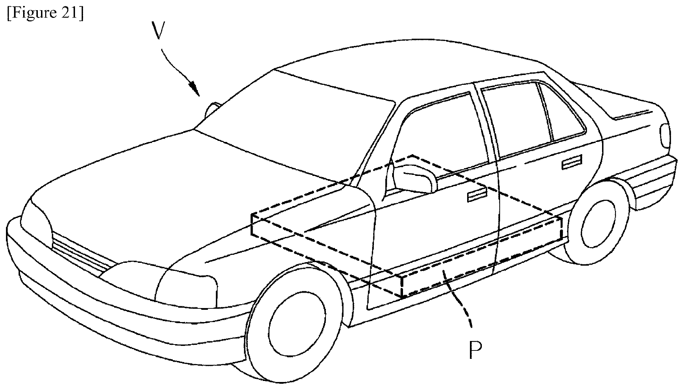

Hereinafter, with reference to FIGS. 20 and 21, a battery pack including a battery module and a vehicle including the battery pack according to an embodiment of the present invention will be described.

The battery module built into the battery pack according to an embodiment of the present invention may be a battery module M according to the first embodiment or the second embodiment, or any battery module according to the present invention.

FIGS. 20 and 21 illustrate a battery pack including a battery module and a vehicle including the battery pack according to an embodiment of the present invention. Referring to FIGS. 20 and 21, s plurality of battery modules M may be integrated into a battery pack P to increase the capacity and/or voltage thereof. The battery pack P may include an exhaust device capable of discharging gases and flames emitted when the battery module M ignites. The battery pack P may be built into a vehicle V as a power source. The vehicle V may include an electric vehicle, a hybrid vehicle, etc.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell;
a housing accommodating the battery cell;
a cover constituting one side of the housing and provided with a first hole connecting inside and outside of the housing;
an insulation sheet provided between the battery cell and the cover and having a second hole disposed at a position corresponding to the first hole; and
a hole insulator covering at least a portion of an inner circumferential surface of the first hole.

2. The battery module of claim 1, wherein the insulation sheet is attached to an inner surface of the cover.

3. The battery module of claim 1, wherein the housing comprises a frame with an open upper portion, and
the cover covers the upper portion of the frame.

4. The battery module of claim 1, wherein a plurality of first holes and a plurality of hole insulators are provided.

5. The battery module of claim 1, wherein the hole insulator is an extension of the insulation sheet extending from the inner circumference of the second hole.

6. The battery module of claim 5, wherein the hole insulator covers entire circumferential section of at least a portion of inner circumferential surface of the first hole in thicknesswise direction.

7. The battery module of claim 6, wherein the hole insulator covers entire inner circumferential surface of the first hole.

8. The battery module of claim 5, wherein the hole insulator comprises an overhang part having a front end extending inward in radial direction of the first hole.

9. The battery module of claim 8, wherein the overhang part is provided along entire circumference of the first hole.

10. The battery module of claim 5, wherein the hole insulator comprises an outer cover portion extending outward in radial direction of the first hole on an outer surface of the cover.

11. The battery module of claim 10, wherein the outer cover is provided along entire circumference of the first hole.

12. The battery module of claim 1, wherein the hole insulator is provided at a hole insulation member mounted at the first hole.

13. The battery module of claim 12, wherein the hole insulator covers entire inner circumferential surface of the first hole.

14. The battery module of claim 12, wherein the hole insulation member overlaps with the insulation sheet in radial direction.

15. The battery module of claim 12, wherein the hole insulation member vertically overlaps with the insulation sheet and the cover on an inner surface of the cover.

16. The battery module of claim 12, wherein the hole insulation member comprises an inner cover extending outward in radial direction of the first hole on an inner surface of the cover.

17. The battery module of claim 16, wherein the inner cover is provided along entire circumference of the first hole.

18. The battery module of claim 12, wherein the hole insulation member comprises an outer cover extending outward in radial direction of the first hole on an outer surface of the cover.

19. The battery module of claim 18, wherein the outer cover is provided along entire circumference of the first hole.

20. A battery pack comprising a battery module of any one of claims 1 to 19.

21. A vehicle comprising a battery pack of claim 20.
